# FASCICULE DE BREVET EUROPEEN

(11) **EP 1 441 843 B1**
(45) Date de publication et mention de la délivrance du brevet: **02.01.2008**
(21) Numéro de dépôt: 02798759.3
(22) Date de dépôt: 12.09.2002
(51) Int. Cl.: B01F 17/00

(54) **DISPERSANTS A EFFET TAMPON POUR BASES ET COMPOSITIONS DE PEINTURE**
DISPERGIERMITTEL MIT PUFFERWIRKUNG FÜR GRUNDLACKE UND LACKZUSAMMENSETZUNGEN
BUFFER-EFFECT DISPERSANTS FOR PAINT BASES AND COMPOSITIONS

(30) Priorité: 18.09.2001 FR 0112048
(43) Date de publication de la demande: 04.08.2004
(73) Titulaire: COATEX S.A.S., 69730 Genay (FR)
(72) Inventeur: RUHLMANN, Denis, F-69730 Genay (FR); SUAU, Jean-Marc, F-69480 Lucenay (FR)
(74) Mandataire: Richebourg, Michel François
(86) Numéro de dépôt international: PCT/FR2002/003101
(87) Numéro de publication internationale: WO 2003/024581

(56) Documents cités:
- EP-A- 0 049 785
- EP-A- 0 722 994
- EP-A- 0 837 111
- WO-A-00/37167
- WO-A-01/42411
- WO-A-95/31487
- DE-A- 19 743 841
- FR-A- 2 016 981
- US-A- 6 051 645
- US-B1- 6 245 832
- DATABASE WPI Section Ch, Week 198907 Derwent Publications Ltd., London, GB; Class A97, AN 1989-050197 XP002203453 & JP 01 006074 A (PENTEL KK), 10 janvier 1989 (1989-01-10)
- DATABASE WPI Section Ch, Week 198631 Derwent Publications Ltd., London, GB; Class A96, AN 1986-199664 XP002203454 & JP 61 130213 A (SUNSTAR KK), 18 juin 1986 (1986-06-18)

## Description

La présente invention concerne le secteur technique des compositions pigmentaires et notamment des compositions pigmentaires pour peintures aqueuses et compositions analogues en phase aqueuse, et encore plus précisément les bases pigmentaires pour peinture et plus particulièrement le domaine des dispersants adaptés à ces bases et compositions.

On connaît dans le domaine technique considéré de nombreux dispersants, comme des polyacrylates, que l'on ajoute à un milieu aqueux ou à de l'eau, et qui développent un effet tampon très limité.

Il est connu que le pH croît significativement dès les faibles concentrations de l'ordre de 1 g/1 en dispersant acrylique totalement neutralisé, avec un pic à environ 9,5-10, puis diminue progressivement lorsque la concentration augmente pour se stabiliser à un pH d'environ 8 pour une concentration de l'ordre de 400 g/l.

Dans la plupart des applications industrielles, cette caractéristique inhérente ne pose pas de problème sérieux.

Un problème sérieux se pose par contre lorsque que l'on emploie de tels agents dispersants dans des peintures aqueuses et compositions pigmentaires en phase aqueuse. En effet, le dispersant, qui est donc généralement un polymère du type acrylique, comme un polyacrylate, est alors « fortement dilué ». Sa concentration usuelle par rapport à l'eau se trouve dans la gamme de 2 g/l à 4 g/l en produit sec.

Or, il est bien connu que les peintures sont constituées notamment de latex (polymères de type esters en particulier) qui peuvent subir une hydrolyse si le pH atteint une valeur de l'ordre de 9,5 à 10 environ.

Un problème tout à fait spécifique aux bases et aux compositions pour peintures aqueuses et compositions analogues en phase aqueuse à base de latex contenant des esters se pose donc lorsque l'on emploie des dispersants du type mentionné.

De plus, les bases ou compositions pour peintures contiennent des charges, comme du carbonate de calcium, du kaolin, du TiO₂ et analogues bien connus présentant des pH proches de la neutralité (pH autour de 7), et le dispersant « fortement dilué » présente des difficultés à s'adsorber correctement sur la surface de ces particules, alors que cela est l'un de ses principaux mécanismes d'action.

Cela peut se traduire globalement par deux conséquences importantes et qui ont toujours posé problème à l'utilisateur final, d'une part le problème d'une dérive viscosimétrique (augmentation de viscosité le plus souvent) dans le temps, de la base ou composition au stockage, et d'autre part celui d'une résistance du film sec à l'abrasion humide, encore dénommée « tenue à l'eau », diminuée.

Le brevet DE 197 43 841 (BK) concerne le même problème que celui résolu par la présente invention mais apporte une solution qui, comme on le verra ci-dessous, est totalement différente de celle apportée par l'invention. Selon ce document, on propose un copolymère de l'anhydride maléique avec du diisobutylène associé au moment de la formulation avec du polyphosphate, ce qui est totalement différent de ce qui sera proposé ci-dessous.

Le brevet FR 2 765 495 (Synthron) décrit un agent dispersant essentiellement employé pour le secteur de la fabrication du papier, et qui est formé d'un polymère cationique comme dispersant et d'une molécule organophosphorée. Selon ce document, le but est d'augmenter l'efficacité du dispersant. Le problème visé n'est donc pas celui de l'invention. De plus, on ne rencontre pas dans les sauces et pâtes de fabrication du papier de problèmes liés à l'augmentation du pH.

Par ailleurs, l'invention n'emploie pas de polymères cationiques.

On connaît encore les publications scientifiques suivantes :
« Methods in enzymology », 1982, vol. 87, pages 405 et suivantes décrit les caractéristiques générales concernant les tampons ainsi que leurs domaines d'efficacité.
« Colourage » (Kamat et Borkar), janvier 1993, pages 19 et suivantes indique que, dans le domaine du textile, les bains de teinture doivent présenter un pH strictement contrôlé, afin d'améliorer l'accrochage des colorants sur les tissus. Plusieurs tampons sont étudiés dans cette publication, afin de sélectionner celui ou ceux conduisant à une meilleure réactivité de la teinture sur le textile.
« Paint & Ink International », mai/juin 1997, pages 18 et suivantes décrit l'emploi des produits utilisés dans le brevet allemand BK™ précité DE 197 43 841. Le dispersant est un polyacrylate auquel on associe, lors de la formulation, un produit Calgon™ du type hexamétaphosphate qui agit comme un co-dispersant améliorant la résistante à l'abrasion humide. Il s'agit donc d'un mélange de deux dispersants. Ceci confirme d'ailleurs l'analyse ci-dessus du brevet DE 197 43 841.

En résumé sur l'art antérieur, on connaît naturellement un grand nombre de tampons qui sont utilisés dans de très nombreuses industries mais on n'a jamais décrit ni suggéré l'emploi de dispersants préalablement combinés, d'une quelconque manière, à un composé présentant des propriétés spécifiques de tampon pour résoudre les problèmes spécifiques précités, liés à l'application dans le domaine des peintures aqueuses et compositions analogues en phase aqueuse.

On définit comme composé présentant des propriétés spécifiques de tampon tout composé organique ou minéral dont l'introduction, dès les faibles concentrations par rapport à l'eau à savoir des concentrations par rapport à l'eau de l'ordre 10 ppm dans la phase continue aqueuse de la composition, a pour propriété de stabiliser le pH de ladite phase.

Notamment, aucun élément de l'art antérieur ne s'est posé le problème de la dilution forte d'un dispersant de type polyacrylate. Il existe donc un besoin important et reconnu pour améliorer le comportement d'un dispersant dans une phase continue lorsque ledit dispersant est fortement dilué.

L'invention vise donc à proposer des bases blanches et/ou des compositions pigmentaires aqueuses pour peinture (que désormais nous désignerons par simplicité, y compris dans les revendications, « compositions »), contenant au moins un dispersant à effet tampon ou un système dispersant/tampon (que désormais nous désignerons par simplicité « dispersant tampon »).

L'invention concerne également ces dispersants tampon dont le choix spécifique et la quantité introduite permet de régler, au mieux et au plus juste, le pH du milieu pour l'application concernée.

Les bases blanches contiennent, comme le sait l'homme du métier, des charges comme des carbonates, notamment de calcium, un oxyde de titane TiO₂, du kaolin, et charges analogues bien connues, utilisables selon l'invention.

La présente invention concerne donc des dispersants tampons pour compositions et bases pour peintures aqueuses et compositions pigmentaires en phase aqueuse analogues aux peintures (ci-après « peintures ») caractérisés en ce qu'ils consistent en un dispersant hydrosoluble partiellement ou totalement neutralisé homopolymère de l'acide acrylique ou méthacrylique ou copolymère de l'acide acrylique ou méthacrylique avec au moins un autre monomère éthylénique insaturé, seul ou en mélange, combiné à un composé possédant des propriétés spécifiques de tampon tel que défini ci-dessous.

Cet autre monomère éthylénique insaturé est choisi parmi l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, les esters des acides acrylique ou méthacrylique tels que notamment l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le vinylméthyléther, les allyliques tels que notamment l'allylamine et ses dérivés.

Plus particulièrement, les dispersants tampons, selon l'invention, pour compositions et bases pour peintures aqueuses et compositions pigmentaires en phase aqueuse analogues aux peintures sont caractérisés en ce que le composé possédant des propriétés spécifiques de tampon est un composé organique ou minéral dont l'introduction, aussi bien dès les faibles concentrations par rapport à l'eau à savoir des concentrations par rapport à l'eau de l'ordre 10 ppm dans la phase continue aqueuse de la composition que pour des concentrations pouvant atteindre 50 % en poids sec, a pour propriété de stabiliser le pH de ladite phase.

Selon un mode de réalisation préféré, ledit composé possédant des propriétés spécifiques de tampon est choisi de manière à régler au mieux et au plus juste, le pH du milieu pour l'application concernée.

Ledit composé possédant des propriétés spécifiques de tampon est très exactement choisi parmi les acides succinique (pKa = 5,28), citrique (pKa = 5,80), 3,3 diméthylglutarique (pKa = 6,01), N-(2-acétamido)imino-diacétique (pKa = 6,62), phosphorique (pKa = 6,84), N,N- bis(2-hydroxyéthyl)-2-amino éthane sulfonique encore noté BES (pKa = 6,98), 3-(N-bis(hydroxyméthyl) méthylamino)-2 hydroxypropane sulfonique encore noté DIPSO (pKa = 7,42), 3-(N-(trishydroxyméthyl) méthylamino)-2 hydroxypropane sulfonique encore noté TAPSO (pKa = 7,49) et N tris(hydroxyméthyl)méthyl glycine (pKa = 7,92), ainsi que parmi leurs sels correspondants.

Les produits et les valeurs sont décrits dans la publication précitée « Methods in Enzymology », page 413.

Selon un mode de réalisation préféré, le contre-ion du dispersant homopolymère ou copolymère est choisi parmi le sodium, le potassium, l'ammonium ou une amine, le magnésium ou le calcium.

Ledit contre-ion est de préférence le sodium, le potassium ou l'ammonium.

Dans l'art antérieur, s'agissant des dispersants de type polyacrylates, il est connu qu'ils sont efficaces comme dispersants lorsqu'ils se trouvent à l'état dissocié.

Pour cela, il faut donc qu'ils soient neutralisés. Ceci implique l'emploi d'un alcali pour amener le pH de neutralisation à une valeur comprise entre environ 7 et environ 10.

A un tel pH, les dispersants polyacrylate sont en effet bien dissociés.

Il est cependant démontré et bien connu qu'ils sont moins chimisorbables c'est-à-dire qu'ils ne réagissent ou n'interagissent pas favorablement avec les surfaces des particules minérales.

Dans cet état, si l'on opère une dilution forte du dispersant dans une composition pour peinture, on observe inévitablement le problème dont l'industrie ne s'était pas préoccupée, ou n'avait pas réellement identifié la raison, et que résout l'invention.

Il est surprenant, dans ces conditions, de constater que l'invention préconise l'ajout d'un composé possédant des propriétés spécifiques de tampon en combinaison avec un dispersant du type polyacrylate homopolymère ou copolymère tel que décrit ci-dessus.

En effet, tout homme du métier comprend qu'un tel ajout va à l'encontre de la dissociation que l'on souhaite.

L'invention est d'autant plus surprenante qu'il est bien connu qu'un sel hydrosoluble a un effet de poison dans une formulation de dispersant. On sait d'ailleurs à ce sujet qu'un sel est un très mauvais dispersant.

Il est à noter également que l'effet dispersant est fonction de la polydispersité du polymère dispersant hydrosoluble et qu'il peut notamment être amélioré par la diminution de sa polydispersité.

L'invention concerne également l'utilisation de la combinaison, selon l'invention, d'un dispersant hydrosoluble partiellement ou totalement neutralisé homopolymère de l'acide acrylique ou méthacrylique ou copolymère de l'acide acrylique ou méthacrylique avec au moins un autre monomère éthylénique insaturé, seul ou en mélange avec un composé possédant des propriétés spécifiques de tampon, comme dispersant tampon de compositions et bases pour peintures aqueuses et compositions pigmentaires en phase aqueuse analogues aux peintures.

L'utilisation selon l'invention, comme dispersant tampon de compositions et bases pour peintures aqueuses et compositions pigmentaires en phase aqueuse analogues aux peintures, de la combinaison d'un composé possédant des propriétés spécifiques de tampon, avec un dispersant hydrosoluble partiellement ou totalement neutralisé qui est soit un homopolymère de l'acide acrylique ou méthacrylique soit un copolymère de l'acide acrylique ou méthacrylique avec au moins un autre monomère éthylénique insaturé, soit un mélange d'un homopolymère de l'acide acrylique ou méthacrylique avec un copolymère précité, se caractérise en ce que le composé possédant des propriétés spécifiques de tampon est tel que défini ci-dessus et en ce qu'il est un composé organique ou minéral dont l'introduction, aussi bien dès les faibles concentrations par rapport à l'eau à savoir des concentrations par rapport à l'eau de l'ordre 10 ppm dans la phase continue aqueuse de la composition que pour des concentrations pouvant atteindre 50 % en poids sec, a pour propriété de stabiliser le pH de ladite phase.

Les compositions aqueuses (compositions pigmentaires et/ou bases blanches) contiennent plus particulièrement de 0,05 % à 2 % en poids sec, et très particulièrement 0,10 % à 0,15 % en poids sec dudit composé dispersant tampon.

D'autres caractéristiques et avantages de l'invention seront mieux compris à la lecture de la description qui va suivre, et des exemples non limitatifs ci-dessous.

### EXEMPLE 1 :

Cet exemple a pour but de mettre en évidence les propriétés rhéologiques des échantillons stockés à température ambiante et de résistance à l'abrasion humide apportées par les agents dispersants tampon selon l'invention pour des formulations pour peinture, mates, sans solvant et à dosage constant.

Pour tous les essais de l'exemple, le dispersant hydrosoluble est un homopolymère de l'acide acrylique.

Ces formulations pour peintures comprennent les ingrédients et additifs listés dans la première partie du tableau 1 constitutifs de la base blanche, et que l'homme du métier reconnaîtra.

Dans cette première partie du tableau 1 :
- Le Natrosol™ 250 HBR est un épaississant cellulosique commercialisé par la société Aqualon.
- Coatex™ P50 désigne un dispersant de type polyacrylate commercialisé par la société Coatex.
- Tego Foamex™ 1488 désigne un agent anti-mousse commercialisé par la société Tego Chimie.
- Le produit Mergal K6N™ désigne un agent biocide commercialisé par la société Troy.
- Le produit TiO₂ RHD2 est un oxyde de titane commercialisé par la société Elementis.
- Le produit Omyacarb™ 5 est une charge fine connue du type CaCO₃ naturel, commercialisée par la société Omya.
- Le produit Socal™ P3 est une charge connue, du type CaCO₃ synthétique encore appelé carbonate de calcium précipité, commercialisée par la société Solvay.
- Le produit Mowilith™ LDM 1871 est un liant de type éthylène-vinylacétate commercialisé par la société Clariant.
- Le produit Acrysol™ RM8W est un épaississant de type polyuréthanne commercialisé par la société Rohm & Haas.

Pour chaque essai, on a préparé la formulation de peinture mate précitée dans laquelle il est ajouté l'agent dispersant tampon à tester.

Puis, pour chacun des essais, on procède aux mesures des propriétés rhéologiques et résistance à l'abrasion humide de la formulation obtenue.

Pour les propriétés rhéologiques, on va chercher à mesurer la viscosité ICI connue de l'homme du métier. Il s'agit de la mesure dite « cône/plan » qui représente ou permet d'appréhender la viscosité de la formulation lors de l'application sur un support.

Lorsque l'on applique un cisaillement, c'est-à-dire notamment à l'application, une viscosité ICI qui augmente signifie que, en un seul passage, on applique une couche de peinture d'épaisseur plus grande.

On mesurera également la viscosité Brookfield™, qui donne une indication de la viscosité à faible cisaillement, et donc des propriétés au stockage ou « en pot », notamment de la stabilité en pot.

A T = 0, il s'agira de la viscosité immédiate, à T = 24 h la viscosité est considérée comme suffisamment stabilisée et jusqu'à un mois (T = 1 mois), on évaluera la stabilité au stockage ou « en pot » en comparant les viscosités Brookfield™ obtenues après un mois aux viscosités Brookfield™ obtenues après 24 heures.

On mesurera également la résistance à l'abrasion humide « AH », ou « tenue à l'eau », selon la norme DIN 53 778, qui représente un essai d'usure sur un film de peinture appliqué sur un support. Le film est normalisé à 100 microns d'épaisseur à l'état sec, et l'essai est mené à l'aide d'une brosse calibrée. On mesure le nombre de cycles de brossage nécessaire pour atteindre un niveau d'usure également normalisé.

L'ensemble des résultats est rassemblé dans le tableau 1 ci-après dans lequel les abréviations ont les significations suivantes :

| | |
|---|---|
| TAPSO : | acide 3-(N-(trishydroxyméthyl) méthylamino) - 2 hydroxypropane sulfonique |
| DIPSO : | acide 3-(N-bis(hydroxyéthyl) méthylamino) - 2 hydroxypropane sulfonique |
| BES : | acide N,N- bis (2 - hydroxyéthyl) - 2 aminoéthane sulfonique |
| Coatex™ P50 : | art antérieur de référence, dispersant polyacrylate commercialisé par la société Coatex. |

L'eau est ajoutée selon la première partie du Tableau, et une quantité supplémentaire d'eau est ajoutée aux fins d'ajustement en bas de Tableau.

### Essai n° 1 :

Cet essai illustre l'art antérieur et met en oeuvre 0,12 % en poids sec du polyacrylate de sodium commercialisé par la société Coatex sous le nom de Coatex™ P50.

### Essai n° 2 :

Cet essai illustre l'invention et met en oeuvre 0,12 % en poids sec du dispersant tampon selon l'invention constitué de 30 % en poids sec d'acide phosphorique et de 70 % en poids sec du polyacrylate de sodium commercialisé par la société Coatex sous le nom de Coatex™ P50.

### Essai n° 3 :

Cet essai illustre l'invention et met en oeuvre 0,12 % en poids sec du dispersant tampon selon l'invention constitué de 0,5 % en poids sec de TAPSO et de 99,5 % en poids sec du polyacrylate de sodium commercialisé par la société Coatex sous le nom de Coatex™ P50.

### Essai n° 4 :

Cet essai illustre l'invention et met en oeuvre 0,12 % en poids sec du dispersant tampon selon l'invention constitué de 2,4 % en poids sec de TAPSO et de 97,6 % en poids sec du polyacrylate de sodium commercialisé par la société Coatex sous le nom de Coatex™ P50.

### Essai n° 5 :

Cet essai illustre l'invention et met en oeuvre 0,12 % en poids sec du dispersant tampon selon l'invention constitué de 0,5 % en poids sec de DIPSO et de 99,5 % en poids sec du polyacrylate de sodium commercialisé par la société Coatex sous le nom de Coatex™ P50.

### Essai n° 6 :

Cet essai illustre l'invention et met en oeuvre 0,12 % en poids sec du dispersant tampon selon l'invention constitué de 2,4 % en poids sec de DIPSO et de 97,6 % en poids sec du polyacrylate de sodium commercialisé par la société Coatex sous le nom de Coatex™ P50.

### Essai n° 7 :

Cet essai illustre l'invention et met en oeuvre 0,12 % en poids sec du dispersant tampon selon l'invention constitué de 0,5 % en poids sec d'acide citrique et de 99,5 % en poids sec du polyacrylate de sodium commercialisé par la société Coatex sous le nom de Coatex™ P50.

### Essai n° 8 :

Cet essai illustre l'invention et met en oeuvre 0,12 % en poids sec du dispersant tampon selon l'invention constitué de 2,4 % en poids sec d'acide citrique et de 97,6 % en poids sec du polyacrylate de sodium commercialisé par la société Coatex sous le nom de Coatex™ P50.

### Essai n° 9 :

Cet essai illustre l'invention et met en oeuvre 0,12 % en poids sec du dispersant tampon selon l'invention constitué de 0,5 % en poids sec de BES et de 99,5 % en poids sec du polyacrylate de sodium commercialisé par la société Coatex sous le nom de Coatex™ P50.

### Essai n° 10 :

Cet essai illustre l'invention et met en oeuvre 0,12 % en poids sec du dispersant tampon selon l'invention constitué de 2,4 % en poids sec de BES et de 97,6 % en poids sec du polyacrylate de sodium commercialisé par la société Coatex sous le nom de Coatex™ P50.

**TABLEAU 1**

| | | **Art antérieur** | **Invention** | **Invention** | **Invention** | **Invention** | **Invention** | **Invention** | **Invention** | **Invention** | **Invention** |
|---|---|---|---|---|---|---|---|---|---|---|---|
| **Essai n°** | | **1** | **2** | **3** | **4** | **5** | **6** | **7** | **8** | **9** | **10** |
| Eau (en g) | | 300 | 300 | 300 | 300 | 300 | 300 | 300 | 300 | 300 | 300 |
| NaOH (en g) | | 0,1 | 0,1 | 0,1 | 0,1 | 0,1 | 0,1 | 0,1 | 0,1 | 0,1 | 0,1 |
| Natrosol 250 HBR (en g) | | 1,5 | 1,5 | 1,5 | 1,5 | 1,5 | 1,5 | 1,5 | 1,5 | 1,5 | 1,5 |
| **P50** (en g) | | 3 | \ | \ | \ | \ | \ | \ | \ | \ | \ |
| **P50 + Acide phosphorique (70-30)** (en g) | | \ | 3 | \ | \ | \ | \ | \ | \ | \ | \ |
| **P50 + Tapso(99,5-0,5)** (en g) | | \ | \ | 3 | \ | \ | \ | \ | \ | \ | \ |
| **P50 + Tapso(97,6.2,4)** (en g) | | \ | \ | \ | 3 | \ | \ | \ | \ | \ | \ |
| **P50 + Dipso(99,5-0,5)** (en g) | | \ | \ | \ | \ | 3 | \ | \ | \ | \ | \ |
| **P50 + Dipso(97,6-2,4)** (en g) | | \ | \ | \ | \ | \ | 3 | \ | \ | \ | \ |
| **P50 + Acide citrique(99,5-0,5) (en g)** | | \ | \ | \ | \ | \ | \ | 3 | \ | \ | \ |
| **P50 + Acide citrique(97,6-2,4) (en g)** | | \ | \ | \ | \ | \ | \ | \ | 3 | \ | \ |
| **P50 + BES(99,5-0,5) (en g)** | | \ | \ | \ | \ | \ | \ | \ | \ | 3 | \ |
| **P50 + BES(97,6.2,4) (en g)** | | \ | \ | \ | \ | \ | \ | \ | \ | \ | 3 |
| Mergal K6N (en g) | | 2 | 2 | 2 | 2 | 2 | 2 | 2 | 2 | 2 | 2 |
| Tego Foamex 1488 (en g) | | 2 | 2 | 2 | 2 | 2 | 2 | 2 | 2 | 2 | 2 |
| TiO2 RHD2 (en g) | | 70 | 70 | 70 | 70 | 70 | 70 | 70 | 70 | 70 | 70 |
| Socal P3 (en g) | | 200 | 200 | 200 | 200 | 200 | 200 | 200 | 200 | 200 | 200 |
| Omyacarb 5 (en g) | | 310 | 310 | 310 | 310 | 310 | 310 | 310 | 310 | 310 | 310 |
| | | | | | | | | | | | |
| NaOH (en g) | | 0,5 | 1 | 0,5 | 0,5 | 0,5 | 0,5 | 0,5 | 0,5 | 0,5 | 0,5 |
| Mowilith LDM 1871 (en g) | | 70 | 70 | 70 | 70 | 70 | 70 | 70 | 70 | 70 | 70 |
| Eau (en g) | | 25,9 | 25,4 | 25,9 | 25,9 | 25,9 | 25,9 | 25,9 | 25,9 | 25,9 | 25,9 |
| Acrysol RM8W (en g) | | 15 | 15 | 15 | 15 | 15 | 15 | 15 | 15 | 15 | 15 |
| Total (g) | | 1000 | 1000 | 1000 | 1000 | 1000 | 1000 | 1000 | 1000 | 1000 | 1000 |
| **% Dispersant** | | **0,12** | **0,12** | **0,12** | **0,12** | **0,12** | **0,12** | **0,12** | **0,12** | **0,12** | **0,12** |
| | | | | | | | | | | | |
| | ICl | 1,2 | 1,2 | 1,1 | 1,1 | 1,1 | 1,2 | 1,2 | 1,2 | 1,1 | 1,2 |
| **T=0** | 10 T/min | 7000 | 8100 | 7700 | 7000 | 6700 | 8000 | 7200 | 7200 | 6500 | 7000 |
| | 100 T/min | 1450 | 1550 | 1550 | 1450 | 1450 | 1550 | 1550 | 1550 | 1450 | 1500 |
| | ICI | 1,1 | 1 | 1,1 | 1,1 | 1 | 1,1 | 1,1 | 1,1 | 1,1 | 1,1 |
| **T=24h** | 10 T/min | 10300 | 10500 | 12200 | 10800 | 10300 | 10700 | 10400 | 10100 | 10200 | 10900 |
| | 100 T/min | 1950 | 2000 | 2100 | 2000 | 2000 | 2050 | 1950 | 2100 | 2000 | 2050 |
| | ICI | 1 | 0,9 | 0,9 | 0,9 | 0,9 | 0,9 | 0,9 | 0,9 1 | | 1 |
| **T=1 mois** | 10 T/min | 22000 | 15200 | 21500 | 21600 | 21500 | 21200 | 20000 | 20800 | 21300 | 21500 |
| **(25 °C)** | 100 T/min | 3250 | 2600 | 3400 | 3200 | 3200 | 3300 | 3200 | 3150 | 3250 | 3250 |
| **AH (28 à temp. ambiante)** | | **390** | **460** | **400** | **420** | **450** | **420** | **430** | **450** | **430** | **470** |

La lecture du tableau 1 permet de voir que l'utilisation de dispersants tampon selon l'invention donne simultanément des propriétés rhéologiques et une résistance à l'abrasion humide meilleures que celles mettant en oeuvre un dispersant de l'art antérieur.

De plus, on peut remarquer que le composé obtenu avec le BES est très efficace.

### EXEMPLE 2 :

Cet exemple a pour but de mettre en évidence les propriétés rhéologiques des échantillons stockés à une température égale à 50°C représentatifs d'un stockage de 6 mois à 25°C et de résistance à l'abrasion humide apportées par les agents dispersants tampon selon l'invention pour des formulations pour peinture, mates, sans solvant et à dosage constant.

Ces formulations pour peintures comprennent les ingrédients et additifs listés dans la première partie du tableau 2 constitutifs de la base blanche, et que l'homme du métier reconnaîtra.

Pour chaque essai, on a préparé la formulation de peinture mate précitée dans laquelle il est ajouté l'agent dispersant tampon à tester.

Puis, pour chacun des essais, on procède aux mesures des propriétés rhéologiques et résistance à l'abrasion humide de la formulation obtenue.

Pour les propriétés rhéologiques, on va chercher à mesurer la viscosité ICI connue de l'homme du métier et mesurée avec la même méthode et le même appareillage que ceux décrits dans l'exemple 1.

On mesurera également la viscosité Brookfield™ obtenue après un mois de vieillissement accéléré par un effet de température.

Ainsi, on laissera l'échantillon à 50°C pendant un mois, puis on le ramènera à 25°C juste avant la mesure. Un mois à 50°C représente sensiblement 6 mois de stockage à 25°C.

On mesurera également la résistance à l'abrasion humide « AH », ou « tenue à l'eau », selon la norme DIN 53 778, avec la même méthode et le même appareillage que ceux décrits dans l'exemple 1.

L'ensemble des résultats est rassemblé dans le tableau 2 ci-après dans lequel les abréviations ont la même signification que celle du tableau 1.

### Essai n° 11 :

Cet essai illustre l'art antérieur et met en oeuvre 0,12 % en poids sec du polyacrylate de sodium commercialisé par la société Coatex sous le nom de Coatex™ P50.

### Essai n° 12 :

Cet essai illustre l'invention et met en oeuvre 0,12 % en poids sec du dispersant tampon selon l'invention constitué de 0,5 % en poids sec d'acide phosphorique et de 99,5 % en poids sec du polyacrylate de sodium commercialisé par la société Coatex sous le nom de Coatex™ P50.

### Essai n° 13 :

Cet essai illustre l'invention et met en oeuvre 0,12 % en poids sec du dispersant tampon selon l'invention constitué de 0,5 % en poids sec de TAPSO et de 99,5 % en poids sec du polyacrylate de sodium commercialisé par la société Coatex sous le nom de Coatex™ P50.

### Essai n° 14 :

Cet essai illustre l'invention et met en oeuvre 0,12 % en poids sec du dispersant tampon selon l'invention constitué de 0,5 % en poids sec d'acide citrique et de 99,5 % en poids sec du polyacrylate de sodium commercialisé par la société Coatex sous le nom de Coatex™ P50.

### Essai n° 15 :

Cet essai illustre l'invention et met en oeuvre 0,12 % en poids sec du dispersant tampon selon l'invention constitué de 0,5 % en poids sec d'acide succinique et de 99,5 % en poids sec du polyacrylate de sodium commercialisé par la société Coatex sous le nom de Coatex™ P50.

### Essai n° 16 :

Cet essai illustre l'invention et met en oeuvre 0,12 % en poids sec du dispersant tampon selon l'invention constitué de 0,5 % en poids sec de BES et de 99,5 % en poids sec du polyacrylate de sodium commercialisé par la société Coatex sous le nom de Coatex™ P50.

**TABLEAU 2**

| | | **Art antérieur** | **Invention** | **Invention** | **Invention** | **Invention** | **Invention** |
|---|---|---|---|---|---|---|---|
| **Essai n°** | | **11** | **12** | **13** | **14** | **15** | **16** |
| Eau (en g) | | 300 | 300 | 300 | 300 | 300 | 300 |
| NaOH (en g) | | 0,1 | 0,1 | 0,1 | 0,1 | 0,1 | 0,1 |
| Natrosol 250 HBR (en g) | | 1,5 | 1,5 | 1,5 | 1,5 | 1,5 | 1,5 |
| **P50** (en g) | | 3 | \ | \ | \ | \ | \ |
| **P50** + **Acide phosphorique (99,5-0,5)** (en g) | | \ | 3 | \ | \ | \ | \ |
| **P50** + **Tapso (99,5-0,5)** (en g) | | \ | \ | 3 | \ | \ | \ |
| **P50+Acide citrique (99,5-0,5)** (en g) | | \ | \ | \ | 3 | \ | \ |
| **P50+Acide succinique (99,5-0,5)** (en g) | | \ | \ | \ | \ | 3 | \ |
| **P50 + BES (99,5-0,5)** (en g) | | \ | \ | \ | \ | \ | 3 |
| Mergal K6N (en g) | | 2 | 2 | 2 | 2 | 2 | 2 |
| Tego Foamex 1488 (en g) | | 2 | 2 | 2 | 2 | 2 | 2 |
| TiO2 RHD2 (en g) | | 70 | 70 | 70 | 70 | 70 | 70 |
| Socal P3 (en g) | | 200 | 200 | 200 | 200 | 200 | 200 |
| Omyacarb 5 (en g) | | 310 | 310 | 310 | 310 | 310 | 310 |
| | | | | | | | |
| NaOH (en g) | | 0,5 | 0,5 | 0,5 | 0,5 | 0,5 | 0,5 |
| Mowilith LDM 1871 (en g) | | 70 | 70 | 70 | 70, | 70 | 70 |
| Eau (en g) | | 25,9 | 25,9 | 25,9 | 25,9 | 25,9 | 25,9 |
| Acrysol RM8W (en g) | | 15 | 15 | 15 | 15 | 15 | 15 |
| Total (g) | | 1000 | 1000 | 1000 | 1000 | 1000 | 1000 |
| % Dispersant | | **0,12** | **0,12** | **0,12** | **0,12** | **0,12** | **0,12** |
| | | | | | | | |
| | ICI | 1 | 0,8 | 0,9 | 0,9 | 0,9 | 0,9 |
| **T=1 mois** | 10 T/min | 33000 | 31000 | 27900 | 28900 | 27300 | 25000 |
| (50 °C) | 100 T/min | 4550 | 4300 | 4000 | 3950 | 3850 | 3800 |
| **AH (28 j à temp. ambiante)** | | **380** | **430** | **480** | **450** | **400** | **400** |

La lecture du tableau 2 permet de voir que l'utilisation de dispersants tampon selon l'invention donne simultanément des propriétés rhéologiques et une résistance à l'abrasion humide meilleures que celles mettant en oeuvre un dispersant de l'art antérieur.

### EXEMPLE 3 :

Cet exemple a pour but de mettre en évidence les propriétés rhéologiques des échantillons stockés à température ambiante et de résistance à l'abrasion humide apportées par les agents dispersants tampon selon l'invention pour des formulations pour peinture, mates, sans solvant et à dosage constant, le dispersant hydrosoluble étant un copolymère de l'acide acrylique.

Ces formulations pour peintures comprennent les ingrédients et additifs listés dans la première partie du tableau 3 constitutifs de la base blanche, et que l'homme du métier reconnaîtra.

Dans cette première partie du tableau 3 :
- Le Natrosol™ 250 HBR est un épaississant cellulosique commercialisé par la société Aqualon.
- Tego Foamex™ 1488 désigne un agent anti-mousse commercialisé par la société Tego Chimie.
- Le produit Mergal K6N™ désigne un agent biocide commercialisé par la société Troy.
- Le produit TiO₂ RHD2 est un oxyde de titane commercialisé par la société Elementis.
- Le produit Omyacarb™ 5 est une charge fine connue du type CaCO₃ naturel, commercialisée par la société Omya.
- Le produit Socal™ P3 est une charge connue, du type CaCO₃ synthétique encore appelé carbonate de calcium précipité, commercialisée par la société Solvay.
- Le produit Mowilith™ LDM 1871 est un liant de type éthylène-vinylacétate commercialisé par la société Clariant.
- Le produit Coapur™ 830W est un épaississant commercialisé par la société Coatex.

Les résultats obtenus pour chacun des essais suivants mettent en oeuvre un matériel et des méthodes semblables à ceux utilisés dans l'exemple 1.

### Essai n° 17 :

Cet essai illustre l'art antérieur et met en oeuvre 0,12 % en poids sec d'un copolymère totalement neutralisé à la potasse, de poids moléculaire en poids égal à environ 10 000, et constitué de 70 % en poids d'acide acrylique et de 30 % en poids d'acrylate de butyle.

### Essai n° 18 :

Cet essai illustre l'invention et met en oeuvre 0,12 % en poids sec du dispersant tampon selon l'invention constitué de 16 % en poids sec d'acide phosphorique et de 84 % en poids sec du copolymère de l'essai n° 17.

Les résultats obtenus sont rassemblés dans le tableau 3 suivant.

**TABLEAU 3**

| | | ART ANTERIEUR | INVENTION |
|---|---|---|---|
| ESSAI n° | | 17 | 18 |
| Eau (en g) | | 300 | 300 |
| NaOH (en g) | | 0,1 | 0,1 |
| Natrosol 250 HBR (en g) | | 1,5 | 1,5 |
| Copolymère (AA - ABu 100 % KOH) (en g) | | 3 | \ |
| Copolymère (AA - ABu 100 % KOH) + acide phosphorique (84 -16) (en g) | | \ | 3 |
| Mergal K6N (en g) | | 2 | 2 |
| Tego Foamex 1488 (en g) | | 2 | 2 |
| TiO2 RHD2 (en g) | | 70 | 70 |
| Socal P3 (en g) | | 200 | 200 |
| Omyacarb 5 (en g) | | 310 | 310 |
| NaOH (en g) | | 1 | 1 |
| Mowilith LDM 1871 (en g) | | 70 | 70 |
| Eau (en g) | | 36,4 | 36,4 |
| Coapur 830W (en g) | | 4 | 4 |
| Total (g) | | 1000 | 1000 |
| % Dispersant | | 0,12 | 0,12 |
| | | | |
| | ICI | 1,3 | 1,2 |
| **T = 0** | 10 T/min | 13500 | 18 300 |
| | 100 T/min | 2500 | 3050 |
| | ICI | 1,2 | 1 |
| **T = 24 h** | 10 T/min | 17 000 | 18300 |
| | 100 T/min | 2900 | 3100 |
| | ICI | 1 | 1,1 |
| **T = 1 mois** | 10 T/min | 26 300 | 23 000 |
| **(25°C)** | 100 T/min | 4050 | 3 700 |
| **AH (28 j à temp. ambiante)** | | **280** | **400** |

| | | | |
|---|---|---|---|
| AA = acide acrylique ABu = acrylate de butyle | | | |

La lecture du tableau 3 permet de voir que l'utilisation de dispersants tampon selon l'invention donne simultanément des propriétés rhéologiques et une résistance à l'abrasion humide meilleures que celles mettant en oeuvre un dispersant de l'art antérieur.

### EXEMPLE 4 :

Cet exemple a pour but de mettre en évidence les propriétés rhéologiques des échantillons stockés à température ambiante et de résistance à l'abrasion humide apportées par les agents dispersants tampon selon l'invention, contenant des quantités variables allant jusqu'à 50 % en poids sec d'acide phosphorique, pour des formulations pour peinture, mates, sans solvant et à dosage constant.

Ces formulations pour peintures comprennent les ingrédients et additifs listés dans la première partie du tableau 4 constitutifs de la base blanche, et que l'homme du métier reconnaîtra.

Dans cette première partie du tableau 4 :
- Le produit Mergal K6N™ désigne un agent biocide commercialisé par la société Troy.
- Le produit Byk™ 34 désigne un agent anti-mousse commercialisé par la société Byk.
- Le produit TiO₂ Tiona RL 68 est un oxyde de titane commercialisé par la société Millenium.
- Le produit Durcal™ 2 est une charge fine connue du type CaCO₃ naturel, commercialisée par la société Omya.
- Le produit Hydrocarb™ est une charge fine connue du type CaCO₃ naturel, commercialisée par la société Omya.
- Le produit Rhodopas™ DS 910 est un latex commercialisé par la société Rhodia.
- Le produit V46 est un épaississant commercialisé par la société Coatex.

Les résultats obtenus pour chacun des essais suivants mettent en oeuvre un matériel et des méthodes semblables à ceux utilisés dans l'exemple 1.

### Essai n° 19 :

Cet essai illustre l'art antérieur et met en oeuvre 0,12 % en poids sec d'un polyacrylate de sodium totalement neutralisé, de poids moléculaire en poids égal à environ 6 000.

### Essai n° 20 :

Cet essai illustre l'invention et met en oeuvre 0,12 % en poids sec du dispersant tampon selon l'invention constitué de 10 % en poids sec d'acide phosphorique et de 90 % en poids sec du polyacrylate de l'essai n° 19.

### Essai n° 21 :

Cet essai illustre l'invention et met en oeuvre 0,12 % en poids sec du dispersant tampon selon l'invention constitué de 20 % en poids sec d'acide phosphorique et de 80 % en poids sec du polyacrylate de l'essai n° 19.

### Essai n° 22 :

Cet essai illustre l'invention et met en oeuvre 0,12 % en poids sec du dispersant tampon selon l'invention constitué de 40 % en poids sec d'acide phosphorique et de 60 % en poids sec du polyacrylate de l'essai n° 19.

### Essai n° 23 :

Cet essai illustre l'invention et met en oeuvre 0,12 % en poids sec du dispersant tampon selon l'invention constitué de 50 % en poids sec d'acide phosphorique et de 50 % en poids sec du polyacrylate de l'essai n° 19.

Les résultats obtenus sont rassemblés dans le tableau 4 suivant.

**TABLEAU 4**

| | | ART ANTERIEUR | INVENTION | INVENTION | INVENTION | INVENTION |
|---|---|---|---|---|---|---|
| ESSAI n° | | 19 | 20 | 21 | 22 | 23 |
| Eau (en g) | | 160 | 160 | 160 | 160 | 160 |
| Ammoniaque (en g) | | 1,0 | 1,0 | 1,0 | 1,0 | 1,0 |
| Polyacrylate (en g) | | 3 | \ | \ | \ | \ |
| Polyacrylate + acide phosphorique (90-10) (en g) | | \ | 3 | \ | \ | \ |
| Polyacrylate + acide phosphorique (80-20) (en g) | | \ | \ | 3 | \ | \ |
| Polyacrylate + acide phosphorique (60-40) (en g) | | \ | \ | \ | 3 | \ |
| Polyacrylate + acide phosphorique (50-50) (en g) | | \ . | \ | \ | \ | 3 |
| Mergal K6N (en g) | | 2 | 2 | 2 | 2 | 2 |
| Byk 34 | | 1 | 1 | 1 | 1 | 1 |
| Tiona RL 68 (en g) | | 41 | 41 | 41 | 41 | 41 |
| Durcal 2 (en g) | | 328 | 328 | 328 | 328 | 328 |
| Hydrocarb (en g) | | 215 | 215 | 215 | 215 | 215 |
| Eau (en g) | | 132,1 | 131,8 | 131,6 | 131,4 | 131,2 |
| Rhodopas DS 910 (en g) | | 82 | 82 | 82 | 82 | 82 |
| MEG (en g) | | 10 | 10 | 10 | 10 | 10 |
| WS (en g) | | 10 | 10 | 10 | 10 | 10 |
| Ammoniaque (en g) | | 1,3 | 1,6 | 1,8 | 2,0 | 2,2 |
| V46 (en g) | | 13,6 | 13,6 | 13,6 | 13,6 | 13,6 |
| Total (g) | | 1000 | 1000 | 1000 | 1000 | 1 000 |
| % Dispersant | | 0,12 | 0,12 | 0,12 | 0,12 | 0,12 |
| | | | | | | |
| **T = 0** | 10 T/min | 13 200 | 9 000 | 8400 | 8100 | 9100 |
| | 100 T/min | 2400 | 1750 | 1650 | 1550 | 1800 |
| | ICI | 1,3 | 1,3 | 1,3 | 1,3 | 1,3 |
| **T = 24 h** | 10 T/min | 10 200 | 7100 | 6900 | 7300 | 9 000 |
| | 100 T/min | 2100 | 1600 | 1600 | 1 600 | 1900 |
| **T = 1 mois** | 10 T/min | 6700 | 5000 | 5500 | 6 200 | 6 600 |
| **(25°C)** | 100 T/min | 1620 | 1350 | 1400 | 1650 | 1750 |
| **AH (28 j à temp. ambiante)** | | **300** | **330** | **510** | **720** | **700** |

| | | | | | | |
|---|---|---|---|---|---|---|
| MEG = monoéthylène glycol WS = White Spirit | | | | | | |

La lecture du tableau 4 permet de voir que l'utilisation de dispersants tampon selon l'invention avec différentes doses de composés à propriété tampon, donne simultanément des propriétés rhéologiques et une résistance à l'abrasion humide meilleures que celles mettant en oeuvre un dispersant de l'art antérieur.

## Revendications

1. Utilisation, dans des compositions et bases pour peintures aqueuses et compositions pigmentaires en phase aqueuse analogues aux peintures, de "dispersant tampon", **caractérisée en ce que** ce dernier résulte de la combinaison préalable d'un composé possédant des propriétés spécifiques de tampon, avec un dispersant hydrosoluble partiellement ou totalement neutralisé qui est soit un homopolymère de l'acide acrylique ou méthacrylique soit un copolymère de l'acide acrylique ou méthacrylique avec au moins un autre monomère éthylénique insaturé, soit un mélange d'un homopolymère de l'acide acrylique ou méthacrylique avec un copolymère précité, et **en ce que** le composé possédant des propriétés spécifiques de tampon est choisi parmi les acides succinique, citrique, 3,3 diméthylglutarique, N-(2-acétamido)imino-diacétique, phosphorique, N,N- bis(2-hydroxyéthyl)-2-amino éthane sulfonique encore noté BES, 3-(N-bis(hydroxyméthyl) méthylamino)-2 hydroxypropane sulfonique encore noté DIPSO, 3-(N-(trishydroxyméthyl) méthylamino)-2 hydroxypropane sulfonique encore noté TAPSO et N tris(hydroxyméthyl)méthyl glycine ainsi que parmi leurs sels correspondants, et **en ce que** le composé possédant des propriétés spécifiques de tampon est un composé organique ou minéral dont l'introduction, aussi bien dès les faibles concentrations par rapport à l'eau à savoir des concentrations par rapport à l'eau de l'ordre 10 ppm dans la phase continue aqueuse de la composition que pour des concentrations pouvant atteindre 50 % en poids sec. a pour propriété de stabiliser le pH de ladite phase.

2. Utilisation, comme dispersant tampon de compositions et bases pour peintures aqueuses et compositions pigmentaires en phase aqueuse analogues aux peintures selon la revendication 1 **caractérisée en ce que** le dispersant hydrosoluble partiellement ou totalement neutralisé est un homopolymère de l'acide acrylique ou méthacrylique.

3. Utilisation, comme dispersant tampon de compositions et bases pour peintures aqueuses et compositions pigmentaires en phase aqueuse analogues aux peintures selon la revendicalion 1 **caractérisée en ce que** le dispersant hydrosoluble partiellement ou totalement neutralisé est un copolymère de l'acide acrylique ou méthacrylique avec au moins un autre monomère éthylénique insaturé.

4. Utilisation, comme dispersant tampon de compositions et bases pour peintures aqueuses et compositions pigmentaires en phase aqueuse analogues aux peintures selon la revendication 3 **caractérisée en ce que** le monomère éthylénique insaturé est choisi parmi l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylarnide, le méthylacrylamide, les esters des acides acrylique ou méthacrylique tels que l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le vinylméthyléther, les allyliques tels que l'allylamine et ses dérivés.

5. Utilisation, comme dispersant tampon de compositions et bases pour peintures aqueuses et compositions pigmentaires en phase aqueuse analogues aux peintures selon la revendication 1 **caractérisée en ce que** le dispersant hydrosoluble partiellement ou totalement neutralisé est un mélange d'un homopolymère de l'acide acrylique ou méthacrylique avec un copolymère de l'acide acrylique ou méthacrylique avec au moins un autre monomère éthylénique insaturé selon la revendication 4.

6. Utilisation, comme dispersant tampon de compositions et bases pour peintures aqueuses et compositions pigmentaires en phase aqueuse analogues aux peintures selon l'une quelconque des revendications 1 à 5 **caractérisée en ce que** le contre-ion du dispersant homopolymère ou copolymère est choisi parmi le sodium, le potassium, l'ammonium ou une amine, le magnésium ou le calcium et Préférentiellement choisi parmi le sodium, le potassium ou l'ammonium.

7. Dispersant tampon pour compositions et bases pour peintures aqueuses et compositions pigmentaires en phase aqueuse analogues aux peintures **caractérisé en ce que** il consiste en un dispersant hydrosoluble partiellement ou totalement neutralisé homopolymère de l'acide acrylique ou méthacrylique ou copolymère de l'acide acrylique ou méthacrylique avec au moins un autre monomère ethylénique insaturé, homopolymère ou copolymère seul ou en mélange, combiné à un composé possédant des propriétés spécifiques de tampon choisi parmi les acides succinique, citrique, 3,3 diméthylglutarique, N-(2-acétamido)imino-diacétique, phosphorique, N,N- bis(2-hydroxyéthyl)-2-amino éthane sulfonique encore noté BES, 3-(N-bis(hydroxyméthyl) méthylamino)-2 hydroxypropane sulfonique encore noté DIPSO, 3-(N-(trishydroxyméthyl) méthylamino)-2 hydroxypropane sulfonique encore noté TAPSO et N tris(hydroxyméthyl)méthyl glycine, ainsi que parmi leurs sels correspondants, et **en ce que** le composé possédant des propriétés spécifiques de tampon est un composé organique ou minéral dont l'introduction, aussi bien dès les faibles concentrations par rapport à l'eau à savoir des concentrations par rapport à l'eau de l'ordre 10 ppm dans la phase continue aqueuse de la composition que pour des concentrations pouvant atteindre 50 % en poids sec, a pour propriété de stabiliser le pH de ladite phase.

8. Dispersant tampon pour compositions et bases pour peintures aqueuses et compositions pigmentaires en phase aqueuse analogues aux peintures selon la revendication 7 **caractérisé** on ce que le dispersant hydrosoluble partiellement ou totalement neutralisé est un homopolymère de l'acide acrylique ou méthacrylique.

9. Dispersant tampon pour compositions et bases pour peintures aqueuses et compositions pigmentaires en phase aqueuse analogues aux peintures selon la revendication 7 **caractérisé en ce que** le dispersant hydrosoluble partiellement ou totalement neutralisé est un copolymère de l'acide acrylique ou méthacrylique avec au moins un autre monomère éthylénique insaturé.

10. Dispersant tampon pour compositions et bases pour peintures aqueuses et compositions pigmentaires en phase aqueuse analogues aux peintures scion la revendication 9 **caractérisé en ce que** le monomère éthylénique insaturé est choisi parmi l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide sirène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, les esters des acides acrylique ou méthacrylique tels que l'acrylate d'éthyle, l'acrylate de butyle, le méthacrylate de méthyle, le phosphate d'acrylate ou méthacrylate d'éthylène ou propylène glycol ou bien encore parmi la vinylpynolidone, le vinylcaprolactame, l'isobutylène, le diisobutylène, l'acétate de vinyle, le styrène, l'alphaméthylstyrène, le vinylméthyléther, les allyliques tels que l'allylamine et ses dérivés.

11. Dispersant tampon pour compositions et bases pour peintures aqueuses et compositions pigmentaires en phase aqueuse analogues aux peintures selon la revendication 7 **caractérisé en ce que** le dispersant hydrosoluble partiellement ou totalement neutralisé est un mélange d'un homopolymère de l'acide acrylique ou méthacrylique avec un copolymère de l'acide acrylique ou médumlique avec au moins un autre monomère éthylénique insaturé selon la revendication 10.

12. Dispersant tampon pour compositions et bases pour peintures aqueuses et compositions pigmentaires en phase aqueuse analogues aux peintures selon l'une quelconque des revendications 7 à 11 **caractérisé en ce que** le contre-ion du dispersant homopolymère ou copolymère est choisi parmi le sodium, le potassium, l'ammonium ou une amine, le magnésium ou le calcium et préférentiellement choisi parmi le sodium, le potassium ou l'ammonium.

## Claims

1. Use, in compositions and bases for aqueous paints and pigment compositions in aqueous phase similar to paints, of "buffer dispersant", **characterised in that** the latter is the result of the prior combination of a compound having specific buffer properties, with a partially or totally neutralised water-soluble dispersant which is either a homopolymer of acrylic or methacrylic acid or a copolymer of acrylic or methacrylic acid with at least one other unsaturated ethylenic monomer, or a mixture of a homopolymer of acrylic or methacrylic acid with a compound mentioned above, and **in that** the compound having specific buffer properties is selected from succinic acid, citric acid, 3,3 dimethylglutaric acid, N-(2-acetamido)imino-diacetic acid, phosphoric acid, N,N-bis(2-hydroxyethyl)-2-amino ethane sulfonic acid, otherwise denoted BES, 3-(N-bis(hydroxymethyl)methylamino)-2 hydroxypropane sulfonic acid otherwise denoted DIPSO, 3-(N-(trishydroxymethyl) methylamino)-2 hydroxypropane sulfonic acid, otherwise denoted TAPSO and N tris(hydroxymethyl)methyl glycine acid as well as from their respective salts, and **in that** the compound having specific buffer properties is an organic or mineral compound, the introduction of which, both from low concentrations with respect to water, namely concentrations with respect to water in the order of 10 ppm in the continuous aqueous phase of the composition, to concentrations which may reach up to 50 % by dry weight, has the property of stabilising the pH of said phase.

2. The use, as a buffer dispersant for compositions and bases for aqueous paints and pigment compositions in aqueous phase similar to paints according to Claim 1 **characterised in that** the partially or totally neutralised water-soluble dispersant is a homopolymer of acrylic or methacrylic acid.

3. The use, as a buffer dispersant for compositions and bases for aqueous paints and pigment compositions in aqueous phase similar to paints according to Claim 1 **characterised in that** the partially or totally neutralised water-soluble dispersant is a copolymer of acrylic or methacrylic acid with at least one other unsaturated ethylenic monomer.

4. The use, as a buffer dispersant for compositions and bases for aqueous paints and pigment compositions in aqueous phase similar to paints according to Claim 3 **characterised in that** the unsaturated ethylenic monomer is selected from itaconic acid, crotonic acid, fumaric acid, maleic anhydride acid and / or 2-acrylamido-2-methyl-1-propane sulfonic acid in acid form or partially neutralised, allylsulfonic acid, methallylsulfonic acid , aliyloxybenzene sulfonic acid, methallyloxybenzene sulfonic acid, 2-hydroxy-3-(2-propenyloxy)propane sulfonic acid, 2-methyl-2-propene-1-sulfonic acid, ethylene sulfonic acid, propene sulfonic acid, 2-methyl sulfonic acid, styrene sulfonic acid and / or its salts, vinyl sulfonic acid, sodium methallylsulfonate, sulfopropyl acrylate or methacrylate, sulfomethylacrylamide, sulfomethylmethacrylamide or further still from acrylamide, methylacrylamide, esters of acrylic or methacrylic acids such as ethyl acrylate, butyl acrylate, methyl methacrylate, acrylate phosphate or ethylene methacrylate or propylene glycol or further still from vinylpyrrolidone, vinylcaprolactam, isobutylene, diisobutylene, vinyl acetate, styrene, alphamethylstyrene, vinylmethylether, allylics such as allylamine and its derivatives.

5. The use, as a buffer dispersant for compositions and bases for aqueous paints and pigment compositions in aqueous phase similar to paints according to Claim 1 **characterised in that** the partially or totally neutralised water-soluble dispersant is a mixture of a homopolymer of acrylic or methacrylic acid with a copolymer of acrylic or methacrylic acid with at least one other unsaturated ethylenic monomer according to Claim 4.

6. The use, as a buffer dispersant for compositions and bases for aqueous paints and pigment compositions in aqueous phase similar to paints according to any one of Claims 1 to 5 **characterised in that** the counter-ion of the homopolymer or copolymer dispersant is selected from sodium, potassium, ammonium or an amine, magnesium or calcium and preferably selected from sodium, potassium or ammonium.

7. The buffer dispersant for compositions and bases for aqueous paints and pigment compositions in aqueous phase similar to paints **characterised in that** it consists of a partially or totally neutralised water-soluble homopolymer dispersant of acrylic or methacrylic acid, or copolymer dispersant of acrylic or methacrylic acid with at least one other unsaturated ethylenic monomer, homopolymer or copolymer alone or In a mixture, combined with a compound having specific buffer properties selected from succinic acid, citric acid, 3,3 dimethylglutaric acid, N-(2-acetamido)imino-diacetic acid, phosphoric acid, N,N-bis(2-hydroxyethyl)-2-amino ethane sulfonic acid, otherwise denoted BES, 3-(N-bis(hydroxymethyl)methylamino)-2 hydroxypropane sulfonic acid otherwise denoted DIPSO, 3-(N-(trishydroxymethyl) methylamlno)-2 hydroxypropane sulfonic acid, otherwise denoted TAPSO and N trls(hydroxymethyl) methyl glycine acid, as well as from their respective salts, and **in that** the compound having specific buffer properties is an organic or mineral compound, the Introduction of which, both from low concentrations with respect to water, namely concentrations with respect to water in the order of 10 ppm in the continuous aqueous phase of the composition, to concentrations which may reach up to 50 % by dry weight, has the property of stabilising the pH of said phase.

8. The buffer dispersant for compositions and bases for aqueous paints and pigment compositions in aqueous phase similar to paints according to Claim 7 **characterised in that** the partially or totally neutralised water-soluble dispersant is a homopolymer of acrylic or methacrylic acid.

9. The buffer dispersant for compositions and bases for aqueous paints and pigment compositions In aqueous phase similar to paints according to Claim 7 **characterised In that** the partially or totally neutralised water-soluble dispersant is a copolymer of acrylic or methacrylic acid with at least one other unsaturated ethylenic monomer.

10. The buffer dispersant for compositions and bases for aqueous paints and pigment compositions in aqueous phase similar to **paints according to Claim 9 characterised In that the** unsaturated ethylenic monomer is selected from itaconic acid, crotonic acid, fumaric acid, maleic anhydride acid and / or 2-acrylamido-2-methyl-1-propane sulfonic acid in acid form or partially neutralised, allylsulfonic acid, methallylsulfonic acid, allyloxybenzene sulfonic acid, methallyloxybenzene sulfonic acid, 2-hydroxy-3-(2-propenyloxy)propane sulfonic acid, 2-methyl-2-propene-1-sulfonic acid, ethylene sulfonic acid, propene sulfonic acid, 2-methyl sulfonic acid, styrene sulfonic acid and / or its salts, vinyl sulfonic acid, sodium methallylsulfonate, sulfopropyl acrylate or methacrylate, sulfomethylacrylamide, sulfomethylmethacrylamide or further still from acrylamide, methylacrylamide, esters of acrylic or methacrylic acids such as ethyl acrylate, butyl acrylate, methyl methacrylate, acrylate phosphate or ethylene methacrylate or propylene glycol or further still from vinylpyrrolidone, vinylcaprolactam, isobutylene, diisobutylene, vinyl acetate, styrene, alphamethylstyrene, vinylmethylether, allylics such as allylamine and its derivatives.

11. The buffer dispersant for compositions and bases for aqueous paints and pigment compositions in aqueous phase similar to paints according to Claim 7 **characterised in that** the partially or totally neutralised water-soluble dispersant is a mixture of a homopolymer of acrylic or methacrylic acid with a copolymer of acrylic or methacrylic acid with at least one other unsaturated ethylenic monomer according to Claim 10.

12. The buffer dispersant for compositions and bases for aqueous paints and pigment compositions in aqueous phase similar to paints according to any one of Claims 7 to 11 **characterised in that** the counter-ion of the homopolymer or copolymer dispersant is selected from sodium, potassium, ammonium or an amine, magnesium or calcium and preferably selected from sodium, potassium or ammonium.

## Patentansprüche

1. Verwendung, in Zusammensetzungen und Grundlangen für wässrige Farben und in Farben entsprechenden Pigmentzusammensetzungen in wässriger Phase, von "Pufferdispergens", **dadurch gekennzeichnet, dass** letzteres das Ergebnis der vorherigen Kombination einer Zusammensetzung ist, die spezielle Puffereigenschaften besitzt, mit einem teilweise oder vollständig neutralisierten wasserlöslichen Dispergiermittel, das entweder ein Homopolymer von Acryl- oder Methacrylsäure oder ein Copolymer von Acrylsäure oder Methacrylsäure mit mindestens einem anderen ethylenisch ungesättigten Monomer oder ein Gemisch von einem Homopolymer von Acrylsäure oder Methacrylsäure mit einem vorgenannten Copolymer ist, und **dadurch**, dass die Verbindung, die spezielle Puffereigenschaften besitzt, ausgewählt ist aus Succinsäure, Citronensäure, 3,3-Dimethylglutarsäure, N-(2-Acetamido)iminodiessigsäure, Phosphorsäure, N,N-Bis(2-hydroxyethyl)-2-aminoethansulfonsäure, auch BES genannt, 3-(N-Bis(hydroxymethyl)methylamino)-2-hydroxypropansulfonsäure, auch DIPSO genannt, 3-(N-(Trishydroxymethyl)-methylamino)-2-hydroxypropansulfonsäure, auch TAPSO genannt, und N-Tris(hydroxymethyl)methylglycin sowie unter ihren entsprechenden Salzen, und **dadurch**, dass die Verbindung, die spezielle Puffereigenschaften besitzt, eine organische oder mineralische Verbindung ist, deren Einbringen, auch bereits bei schwachen Konzentrationen bezüglich Wasser, nämlich Konzentrationen bezüglich Wasser in der Größenordnung von 10 ppm in der kontinuierlichen wässrigen Phase der Zusammensetzung, wie auch für Konzentrationen, die 50 Trocken-Gew.-% erreichen können, die Eigenschaft der Stabilisierung des pH-Wertes der Phase besitzen.

2. Verwendung als Pufferdispergens von Zusammensetzungen und Grundlagen für wässrige Farben und Farben entsprechenden Pigmentzusammensetzungen in wässriger Phase nach Anspruch 1, **dadurch gekennzeichnet, dass** das teilweise oder vollständig neutralisierte wasserlösliche Dispergiermittel ein Homopolymer von Acryl- oder Methacrylsäure ist.

3. Verwendung als Pufferdispergens von Zusammensetzungen und Grundlagen für wässrige Farben und Farben entsprechenden Pigmentzusammensetzungen in wässriger Phase nach Anspruch 1, **dadurch gekennzeichnet, dass** das teilweise oder vollständig neutralisierte wasserlösliche Dispergiermittel ein Copolymer von Acryl- oder Methacrylsäure mit mindestens einem anderen ethylenisch ungesättigten Monomer ist.

4. Verwendung als Pufferdispergens von Zusammensetzungen und Grundlagen für wässrige Farben und Farben entsprechenden Pigmentzusammensetzungen in wässriger Phase nach Anspruch 3, **dadurch gekennzeichnet, dass** das ethylenisch ungesättigte Monomer ausgewählt ist aus Itaconsäure, Crotonsäure, Fumarsäure, Maleinsäureanhydrid und/oder 2-Acrylamido-2-methyl-1-propansulfonsäure in saurer oder teilweise neutralisierter Form, Allylsulfonsäure, Methallylsulfonsäure, Allyloxybenzonsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylsulfonsäure, Styrolsulfonsäure und/oder ihren Salzen, Vinylsulfonsäure, Natriumethallylsulfonat, Sulfopropylacrylat oder -methacrylat, Sulfomethylacrylamid, Sulfomethylmethacrylamid oder auch aus Acrylamid, Methacrylamid, den Estern der Acryl- oder Methacrylsäure, wie Ethylacrylat, Butylacrylat, Methylmethacrylat, Ethylen- oder Propylenglycolacrylat- oder -methacrylatphosphat, oder auch aus Vinylpyrrolidon, Vinylcaprolactam, Isobutylen, Diisobutylen, Vinylacetat, Styrol, Alphamethylstyrol, Vinylmethylether, AllylVerbindungen, wie Allylamin, und ihren Derivaten.

5. Verwendung als Pufferdispergens von Zusammensetzungen und Grundlagen für wässrige Farben und Farben entsprechenden Pigmentzusammensetzungen in wässriger Phase nach Anspruch 1, **dadurch gekennzeichnet, dass** das teilweise oder vollständig neutralisierte wasserlösliche Dispergiermittel ein Gemisch eines Homopolymers von Acrylsäure oder Methacrylsäure mit einem Acrylsäure- oder Methacrylsäurecopolymer mit mindestens einem anderen ethylenisch ungesättigten Monomer nach Anspruch 4 ist.

6. Verwendung als Pufferdispergens von Zusammensetzungen und Grundlagen für wässrige Farben und Farben entsprechenden Pigmentzusammensetzungen in wässriger Phase nach einem der Ansprüche 1 bis 5, **dadurch gekennzeichnet, dass** das Gegenion des homopolymeren oder copolymeren Dispergiermittels aus Natrium, Kalium, Ammonium oder einem Amin, Magnesium oder Calcium und vorzugsweise aus Natrium, Kalium oder Ammonium ausgewählt ist.

7. Pufferdispergens für Zusammensetzungen und Grundlagen für wässrige Farben und Farben entsprechenden Pigmentzusammensetzungen in wässriger Phase, **dadurch gekennzeichnet, dass** es aus einem teilweise oder vollständig neutralisierten wasserlöslichen Acrylsäure- oder Methacrylsäurehomopolymer oder Acrylsäure- oder Methacrylsäurecopolymer mit mindestens einem anderen ethylenisch ungesättigten Monomer, Homopolymer oder Copolymer allein oder im Gemisch besteht, kombiniert mit einer Verbindung, die spezielle Puffereigenschaften besitzt, ausgewählt aus Succinsäure, Citronensäure, 3,3-Dimethylglutarsäure, N-(2-Acetamido)imino-diessigsäure, Phosphorsäure, N,N-Bis(2-hydroxyethyl)-2-aminoethansulfonsäure, auch BES genannt, 3-(N-Bis(hydroxymethyl)methylamino)-2-hydroxypropansulfonsäure, auch DIPSO genannt, 3-(N-(Trishydroxymethyl)methylamino)-2-hydroxypropan-sulfonsäure, auch TAPSO genannt, und N-Tris(hydroxymethyl)methylglycin, sowie aus ihren entsprechenden Salzen, und **dadurch**, dass die Verbindung, die spezielle Puffereigenschaften besitzt, eine organische oder mineralische Verbindung ist, deren Einbringen, auch bereits bei schwachen Konzentrationen bezüglich Wasser, nämlich Konzentrationen bezüglich Wasser in der Größenordnung von 10 ppm in der kontinuierlichen wässrigen Phase der Zusammensetzung, wie auch für Konzentrationen, die 50 Trocken-Gew.-% erreichen können, die Eigenschaft der Stabilisierung des pH-Wertes der Phase besitzen.

8. Pufferdispergens für Zusammensetzungen und Grundlagen für wässrige Farben und Farben entsprechenden Pigmentzusammensetzungen in wässriger Phase nach Anspruch 7, **dadurch gekennzeichnet, dass** das teilweise oder vollständig neutralisierte wasserlösliche Dispergiermittel ein Homopolymer von Acryl- oder Methacrylsäure ist.

9. Pufferdispergens für Zusammensetzungen und Grundlagen für wässrige Farben und Farben entsprechenden Pigmentzusammensetzungen in wässriger Phase nach Anspruch 7, **dadurch gekennzeichnet, dass** das teilweise oder vollständig neutralisierte wasserlösliche Dispergiermittel ein Copolymer von Acryl- oder Methacrylsäure mit mindestens einem anderen ethylenischen ungesättigten Monomer ist.

10. Pufferdispergens für Zusammensetzungen und Grundlagen für wässrige Farben und Farben entsprechenden Pigmentzusammensetzungen in wässriger Phase nach Anspruch 9, **dadurch gekennzeichnet, dass** das ethylenisch ungesättigte Monomer ausgewählt ist aus Itaconsäure, Crotonsäure, Fumarsäure, Maleinsäureanhydrid und/oder 2-Acrylamido-2-methyl-1-propansulfonsäure in saurer oder teilweise neutralisierter Form, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylsulfonsäure, Styrolsulfonsäure und/oder ihren Salzen, Vinylsulfonsäure, Natriumethallylsulfonat, Sulfopropylacrylat oder -methacrylat, Sulfomethylacrylamid, Sulfomethylmethacrylamid oder auch aus Acrylamid, Methacrylamid, den Estern der Acryl- oder Methacrylsäure, wie Ethylacrylat, Butylacrylat, Methylmethacrylat, Ethylen- oder Propylenglycolacrylat- oder -methacrylatphosphat, oder auch aus Vinylpyrrolidon, Vinylcaprolactam, Isobutylen, Diisobutylen, Vinylacetat, Styrol, Alphamethylstyrol, Vinylmethylether, AllylVerbindungen, wie Allylamin, und ihren Derivaten.

11. Pufferdispergens für Zusammensetzungen und Grundlagen für wässrige Farben und Farben entsprechenden Pigmentzusammensetzungen in wässriger Phase nach Anspruch 7, **dadurch gekennzeichnet, dass** das teilweise oder vollständig neutralisierte wasserlösliche Dispergiermittel ein Gemisch eines Homopolymers von Acryl- oder Methacrylsäure mit einem Copolymer von Acryl- oder Methacrylsäure mit mindestens einem anderen ethylenisch ungesättigten Monomer nach Anspruch 10 ist.

12. Pufferdispergens für Zusammensetzungen und Grundlagen für wässrige Farben und Farben entsprechenden Pigmentzusammensetzungen in wässriger Phase nach einem der Ansprüche 7 bis 11, **dadurch gekennzeichnet, dass** das Gegenion des homopolymeren oder copolymeren Dispergiermittels aus Natrium, Kalium, Ammonium oder einem Amin, Magnesium oder Calcium und vorzugsweise aus Natrium, Kalium oder Ammonium ausgewählt ist.
